**Europäisches Patentamt**

**European Patent Office**

**Office européen des brevets**

(11) Veröffentlichungsnummer: **0 275 462**
**A2**

(12) # EUROPÄISCHE PATENTANMELDUNG

(21) Anmeldenummer: 87118303.4

(51) Int. Cl.4: **B29C 47/68**

(22) Anmeldetag: 10.12.87

(30) Priorität: 23.01.87 CH 242/87

(43) Veröffentlichungstag der Anmeldung:
27.07.88 Patentblatt 88/30

(84) Benannte Vertragsstaaten:
AT DE FR GB IT

(71) Anmelder: **INDUPACK AG**
**Gartenstrasse 2**
**CH-6300 Zug(CH)**

(72) Erfinder: **Petschner, Goetz**
**Im Walder 28**
**CH-8702 Zollikon(CH)**

(74) Vertreter: **Petschner, Goetz**
**Patentanwaltsbüro G. Petschner**
**Seidengasse 18**
**CH-8001 Zürich(CH)**

(54) **Verfahren zum Filtern eines warmweichen Kunststoffes und Filtereinrichtung für Extrusionsanlagen zur Durchführung des Verfahrens.**

(57) Die Filtereinrichtung für Extrusionsanlagen, bei welcher ein warmweicher Kunststoffstrom durch einen Strömungskanal (1) in einem Filtergehäuse (5) zu einer Düse (6) gelangt, ist der Strömungskanal eingangsseitig über ein 3-Weg-Umschaltventil (2) in zwei Zweigleitungen (7 und 8) aufgeteilt, die ausgangsseitig gemeinsam über einen Strömungskanalabschnitt (1') an der Extrusionsdüse (6) ausmünden und in deren Strömungsweg je ein verschiebbares Filterband (3 resp. 4) angeordnet ist. Durch diese Massnahmen ist eine Wiederherstellung der vorbestimmten Durchströmfähigkeit der Filterbandmittel durch nunmehr strömungsdruckfreies Verschieben der Filterbandmittel möglich.

Fig. 2

EP 0 275 462 A2

Xerox Copy Centre

## Verfahren zum Filtern eines warmweichen Kunststoffes und Filtereinrichtung für Extrusionsanlagen zur Durchführung des Verfahrens

Die vorliegende Erfindung betrifft ein Verfahren zum Filtern eines warmweichen Kunststoffstromes auf seinem Wege durch einen Strömungskanal in einem Filtergehäuse zu einer Düse einer Extrusionsanlage, wobei der warmweiche Kunststoffstrom durch Filterbandmittel gepresst wird.

Extrusionsprozesse, bei denen warmweiche Kunststoffe mittels Schnecken-oder Kolbenpressen durch Düsenmittel extrudiert werden, dienen beispielsweise der Herstellung von Folien u. dgl.

Bei Einrichtungen dieser Art ist es üblich, die warmweichen Kunststoffe durch ein Filterband zu pressen, um Verunreinigungen zu entfernen. Dieses Filterband kann dabei quer durch den zu filternden Kunststoffstrom bewegt werden, um einen sich zusetzenden Filterbereich durch unverschmutzte Bereiche zu ersetzen.

Solche Einrichtungen verlangen allerdings sehr aufwendige und somit teure Filterbänder, da diese eine hohe Zugfestigkeit aufweisen müssen, um sie quer zum unter relativ hohem Strömungsdruck stehenden Kunststoffstrom bewegen zu können.

Werden Ausgangsmaterialien (Granulate) mit hohem Verunreinigungsgrad (etwa durch Recycling) verwendet, werden solche Einrichtungen dann auf Grund des erhöhten Filterverbrauches rasch unrentabel.

Es ist somit Aufgabe der vorliegenden Erfindung, ein Verfahren zu schaffen, dass die Verwendung weniger teurer Filter gestattet und trotzdem eine wirksame und wirtschaftlich vertretbare Reinigung von auch stark verschmutzten warmweichen Kunststoffströmen gewährleistet.

Dies wird erfindungsgemäss zunächst dadurch erreicht, dass der Kunststoffstrom kontinuierlich aufrechterhalten und dabei wechselweise durch eine von zwei, je mit Filterbandmitteln versehene Zweigleitungen geführt wird, wobei an den Filterbandmitteln in der jeweils strömungsfreien Zweigleitung die vorbestimmte, durch Verunreinigung reduzierte Durchströmfähigkeit wiederhergestellt wird.

Die Wiederherstellung der gewünschten Durchströmfähigkeit kann somit nunmehr am vom Strömungsdruck unbelasteten Filterband erfolgen, ohne dass dabei der Extrusionsprozess unterbrochen werden müsste.

Dieses Verfahren lässt sich dabei zudem so ausgestalten, indem die Wiederherstellung der vorbestimmten Durchströmfähigkeit der Filterbandmittel durch strömungsdruckfreies Verschieben der Filterbandmittel respektive durch Erzeugung eines Rückstromes von warmweichem Kunststoff in der betreffenden Zweigleitung erfolgen kann.

Ferner betrifft die vorliegende Erfindung eine Filtereinrichtung für Extrusionsanlagen, bei welcher ein warmweicher Kunststoffstrom durch einen Strömungskanal in einem Filtergehäuse zu einer Düse gelangt und dabei verschiebbare Filterbandmittel durchdringt, zur Durchführung des erfindungsgemässen Verfahrens.

Diese Filtereinrichtung zeichnet sich erfindungsgemäss dadurch aus, dass der Strömungskanal im Filtergehäuse eingangsseitig über ein 3-Weg-Umschaltventil in zwei Zweigleitungen übergeht, die ausgangsseitig gemeinsam über einen Strömungskanalabschnitt an der Extrusionsdüse ausmünden und in deren Strömungsweg je ein verschiebbares Filterband angeordnet ist.

Hierbei ist es vorteilhaft, wenn in jeder Zweigleitung zwischen dem betreffenden Filterband und dem Umschaltventil eine Drucksonde angeordnet ist, deren Signale der Umschaltung des Umschaltventils dienen.

Dadurch kann eine automatische Umschaltung erfolgen, um die Strömung in der Zweigleitung, in welcher sich der verschmutzte Filter befindet, zu unterbrechen, was eine Wiederherstellung der vorbestimmten Durchströmfähigkeit der Filterbandmittel durch strömungsdruckfreies Verschieben der Filterbandmittel erlaubt.

Um zudem die Wiederherstellung der vorbestimmten Durchströmfähigkeit der Filterbandmittel durch einen Spülvorgang zu erreichen, indem ein Rückstrom von warmweichem Kunststoff in der betreffenden Zweigleitung erfolgt, der zudem eine Filterverschiebung bewirken oder unterstützen kann, ist an jeder Zweigleitung zwischen dem betreffenden Filterband und dem Umschaltventil ein Auslassventil vorgesehen.

Eine beispielsweise Ausführungsform einer Filtereinrichtung zur Durchführung des erfindungsgemässen Verfahrens ist nachfolgend anhand der Zeichnungen näher erläutert.

Es zeigen:

Fig. 1 eine Schrägrissdarstellung der erfindungsgemässen Filtereinrichtung für Extrusionsanlagen zum Filtern eines warmweichen Kunststoffes; und

Fig. 2 die Anordnung gemäss Fig. 1 in einer Prinzip-Skizze.

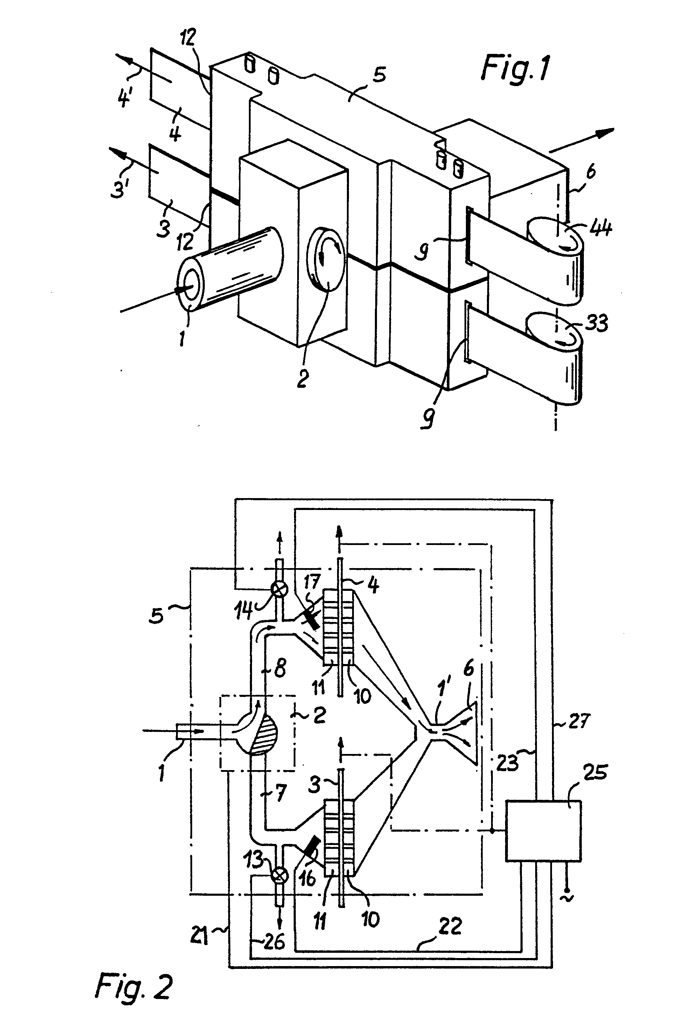

Die in den Fig. 1 und 2 veranschaulichte Filtereinrichtung umfasst ein Filtergehäuse 5, dessen Strömungskanal 1 eingangsseitig an eine nicht näher gezeigte, bekannte Fördereinrichtung einer Extrusionsanlage und ausgangsseitig über einen Strömungskanalabschnitt 1' an eine Extrusionsdüse 6 anschliessbar ist.

Wie die Prinzip-Skizze gemäss Fig. 2 mehr im Einzelnen zeigt, geht der Strömungskanal 1 im Filtergehäuse 5 eingangsseitig über ein 3-Weg-Umschaltventil 2 in zwei Zweigleitungen 7 und 8 über, die dann wieder ausgangsseitig in den gemeinsamen Strömungskanalabschnitt 1' übergehen.

Erfindungsgemäss ist dabei in jeder Zweigleitung 7 resp. 8 ein verschiebbares Filterband 3 resp. 4 angeordnet.

Die Filterbänder 3 und 4 sind in ansich bekannter Weise zwischen gelochten Stützplatten 10 und 11 geführt und an den Einlaufspälten 9 resp. Auslaufspälten 12 in nicht näher gezeigter Weise abgedichtet. Nicht näher gezeigte Zugmittel können dabei die Filterbänder 3 und 4 in Richtung der Pfeile 3' und 4' von den Vorratsrollen 33 resp. 44 abziehen, oder die Filterbänder können durch inneren Schub weitertransportiert werden, indem der Dichtungsbereich der genannten Ein-und Auslaufspälte 9,10 für die Filterbänder kurzfristig unterschiedlich erwärmt wird, wie das ansich bekannt ist.

Erfindungswesentlich ist jedoch, dass durch diese Anordnung es nunmehr möglich wird, unter Aufrechterhaltung eines kontinuierlichen Kunststoffstromes zur Extrusionsdüse 6 hin an den Filterbändern 3 oder 4 in der jeweils strömungsfreien Zweigleitung 7 oder 8 die vorbestimmte, durch Verunreinigung reduzierte Durchströmfähigkeit wieder herzustellen, ohne diese einer grösseren Belastung auszusetzen.

Die Umstellung von einem Teilkanal zum anderen erfolgt zweckmässig automatisch, wofür in jeder Zweigleitung 7 resp. 8 zwischen dem betreffenden Filterband 3 resp. 4 und dem Umschaltventil 2 eine Drucksonde 16 resp. 17 angeordnet ist, deren vorzugsweise einstellbarer Schwellwert ein Mass für die Verschmutzung des Filters und den damit verbundenen Rückstau ist, der eine Umschaltung der Strömung auf den anderen Teilkanal nötig macht. Hierfür sind die Drucksonden 16 und 17 über Steuerleitungen 22 und 23 sowie das 3-Weg-Umschaltventil 2 über eine Steuerleitung 21 mit einer zentralen Steuerschaltung 25 verbunden.

Diese Steuerschaltung 25 kann dann auch das Steuersignal für den Weitertransport des entlasteten Filterbandes 3 oder 4 zur Wiederherstellung seiner vorbestimmten Durchströmfähigkeit liefern (nicht gezeigt).

Um vorgängig einer Weiterverschiebung des betreffenden Filterbandes die Wiederherstellung der vorbestimmten Durchströmfähigkeit durch einen Spülvorgang mittels Rückstrom zu bewirken, ist an jeder Zweigleitung 7 resp. 8 zwischen dem betreffenden Filterband 3 resp. 4 und dem Umschaltventil 2 ein Auslassventil 13 resp. 14 angeordnet, welche ebenfalls von der Steuerschaltung 25 über Steuerleitungen 26 resp. 27 betätigbar sind.

Wird das betreffende Auslassventil in der druckfreien Zweigleitung geöffnet, erfolgt unter dem ausgangsseitigen Strömungsdruck in der anderen Zweigleitung ein Teilrückstrom von warmweichem Kunststoff durch den Filter der bis dahin druckfreien Zweigleitung, womit dieser Filter durch die Gegenströmung ausgespült und gereinigt wird. Hierbei fliessen die Verunreinigungen mit dem Rückstrom durch das Auslassventil ab. Somit kann vor einem Filtervorschub ein mehrmaliges Rückspülen erfolgen, was zusätzlich den durch die Filtermittel bedingten Aufwand verringert.

Die Ueberwachung der Notwendigkeit einer Filterverschiebung kann auch hier automatisiert und von der Steuerschaltung 25 übernommen werden, indem etwa ein Zeitschwellwert den Zeitabstand zwischen einer Stromumleitung nach einer Rückspülung und jener nach erneuter Auslösung durch die betreffende Drucksonde bestimmt und dann den Filtervorschub auslöst (nicht gezeigt).

Die vorbeschriebene Filtereinrichtung, welche im Rahmen der Erfindung natürlich vielfach modifiziert werden kann, gestattet somit ein Verfahren zum Filtern eines warmweichen Kunststoffes ohne grossen Aufwand an Filtermitteln auch bei stark verschmutztem zu extrudierenden Material.

Dies wird insbesondere dadurch erreicht, dass ein Verschieben der Filtermittel erst nach mehrmaligen Spülen überhaupt notwendig wird und wenn, dann ein Verschieben praktisch ohne Auflage-Reibungsdruck an den Stützplatten erfolgen kann, da der Strömungsdruck fehlt.

**Ansprüche**

1. Verfahren zum Filtern eines warmweichen Kunststoffstromes auf seinem Wege durch einen Strömungskanal in einem Filtergehäuse zu einer Düse einer Extrusionsanlage, wobei der warmweiche Kunststoffstrom durch Filterbandmittel gepresst wird, dadurch gekennzeichnet, dass der Kunststoffstrom kontinuierlich aufrecht erhalten und dabei wechselweise durch eine von zwei, je mit Filterbandmitteln versehene Zweigleitungen geführt wird, wobei an den Filterbandmitteln in der jeweils strömungsfreien Zweileitung die vorbestimmte, durch Verunreinigung reduzierte Durchströmfähigkeit wiederhergestellt wird.

2. Verfahren nach Anspruch 1, dadurch gekennzeichnet, dass die Wiederherstellung der vorbestimmten Durchströmfähigkeit der Filterbandmittel durch strömungsdruckfreies Verschieben der Filterbandmittel erfolgt.

3. Verfahren nach Anspruch 1, dadurch gekennzeichnet, dass die Wiederherstellung der vorbestimmten Durchströmfähigkeit der Filterbandmittel durch Erzeugung eines Rückstromes von warmweichem Kunststoff in der betreffenden Zweigleitung erfolgt.

4. Verfahren nach den Ansprüchen 2 und 3, dadurch gekennzeichnet, dass vor einer Wiederherstellung der vorbestimmten Durchströmfähigkeit der Filterbandmittel durch strömungsdruckfreies Verschieben der Filterbandmittel mindestens einmal eine Wiederherstellung der vorbestimmten Durchströmfähigkeit der Filterbandmittel durch Erzeugung eines Rückstromes von warmweichem Kunststoff in der betreffenden Zweigleitung durchgeführt wird.

5. Verfahren nach Anspruch 2, dadurch gekennzeichnet, dass für das strömungsdruckfreie Verschieben der Filterbandmittel der Dichtungsbereich der Ein-und Auslaufspälte der Filterbandmittel im Filtergehäuse kurzfristig zur Erzeugung einer inneren Schubwirkung unterschiedlich erwärmt wird.

6. Filtereinrichtung ·für Extrusionsanlagen, bei welcher ein warmweicher Kunststoffstrom durch einen Strömungskanal in einem Filtergehäuse zu einer Düse gelangt und dabei verschiebbare Filterbandmittel durchdringt, zur Durchführung des Verfahrens nach Patentanspruch 1, dadurch gekennzeichnet, dass der Strömungskanal (1) im Filtergehäuse (5) eingangsseitig über ein 3-Weg-Umschaltventil (2) in zwei Zweigleitungen (7 und 8) übergeht, die ausgangsseitig gemeinsam über einen Strömungskanalabschnitt (1') an der Extrusionsdüse (6) ausmünden und in deren Strömungsweg je ein verschiebbares Filterband (3 resp. 4) angeordnet ist.

7. Einrichtung nach Anspruch 4, dadurch gekennzeichnet, dass in jeder Zweigleitung (7 resp. 8) zwischen dem betreffenden Filterband (3 resp. 4) und dem Umschaltventil (2) eine Drucksonde (16 resp. 17) angeordnet ist, deren Signale der Umschaltung des Umschaltventils dienen.

8. Einrichtung nach Anspruch 4, dadurch gekennzeichnet, dass an jeder Zweigleitung (7 resp. 8) zwischen dem betreffenden Filterband (3 resp. 4) und dem Umschaltventil (2) ein Auslassventil (13 resp. 14) angeordnet ist.

Fig.1

Fig. 2